# EUROPEAN PATENT APPLICATION

(11) **EP 2 397 514 A2**
(43) Date of publication of application: **21.12.2011**
(21) Application number: 11170651.1
(22) Date of filing: 21.06.2011
(51) Int. Cl.: C08K 5/03, C09K 21/08

(54) **Firestop composition comprising thermoplastic, intumescent, and flame retardants**

(30) Priority: 21.06.2010 US 356919 P
(71) Applicant: Pyrophobic Systems Ltd., Barrie ON L4N 0B7 (CA)
(72) Inventor: Zhvanetskiy, Igor, Barrie, Ontario L4N 0B7 (CA); Page, John B., Barrie, Ontario L4N 0B7 (CA); Bernt, Kurt, Barrie, Ontario L4N 0B7 (CA)
(74) Representative: Jönsson, Anneli

(57) **Abstract**

A composition for a firestop is provided. The composition comprises a thermoplastic; expandable graphite; alumina trihydrate; and a flame retardant compound or mixture comprising antimony and a halogen. There is also provided a flame retardant composite, which comprises expandable graphite; alumina trihydrate; antimony; and a halogen. The halogen may include bromine. The flame retardant compound may be brominated antimony. The flame retardant mixture may include an antimony oxide and a compound containing bromine. The flame retardant composite may comprise brominated antimony, or comprise antimony trioxide and a bromine-containing compound.

## Description

### FIELD OF THE INVENTION

The present invention relates generally to intumescent firestop materials, and particularly to thermoplastic intumescent compositions for use as firestop materials, and related methods.

### BACKGROUND OF THE INVENTION

Intumescent materials can be used as firestop materials in various applications. An intumescent material can expand substantially in volume on heating, and when placed adjacent an opening can expand to block the opening on exposure to fire, thus preventing spread of fire, smoke, or fumes through the opening.

For example, US 6,747,074 to Buckingham et al., issued June 8, 2004, discloses a flexible, solid fire sealant. The sealant contains water insoluble intumescent mineral granules, a polymeric, halogen-free binder, and a flame retardant. The sealant is produced by high shear mixing in a substantially volatile-free state and capable of being molded or extruded into a variety of shapes. The sealant has a softness value of from about 0.01 to about 3.75 mm and exhibits high expansion values and chars upon exposure to heat. The intumescent material in the sealant is preferably a mixture of alkali metal silicates. Other intumescent compounds may be used especially if admixed with the alkali metal silicates, which include expandable graphite. The binder is thermoplastic or thermosetting, and can be selected from many different substantially linear polymers. The most preferred binder contains ethylene vinyl acetate copolymer. The flame retardant is preferably a phosphorous and/or nitrogen containing material which promotes the charring of organic binders by forming acid when heated. Endothermic materials, such as alumina trihydrate, are also appropriate flame retardants.

### SUMMARY OF THE INVENTION

It has been recognized that some intumescent fire sealants are not convenient to use in some applications. There is thus a need to provide improved intumescent firestop materials. For example, it is desirable to provide an intumescent firestop material that has improved performance or properties suitable for use in a wide variety of applications. It is also desirable to provide an intumescent firestop material that is easier and less expensive to produce or use.

For instance, it has been unexpectedly discovered that a mixture of thermoplastic, expandable graphite, either alumina trihydrate or magnesium hydroxide, and a flame retardant compound or mixture containing antimony and a halogen can provide a synergistic firestop effect. With such a synergistic mixture, it is possible to reduce the amount of the flame retardants or intumescent in the mixture, with concurrent increase of the amount of other functional materials in the mixture, while still achieving an adequate firestop effect. As a result, it is convenient to control or adjust the properties, such as hardness and strength, of the firestop compositions.

It is recognized that in some applications, a pre-shaped thermoplastic firestop material that can substantially retain its shape during normal use is more convenient to use, as compared to a fluid, emulsion, or flexible sealant that is viscous, or pliable/malleable. For example, when the firestop material is sufficiently hard and strong, it may be conveniently shaped to engage with another object, such as by threaded engagement or hooking engagement. It may also be conveniently used as part of a support, housing, or fixture.

Further, an intumescent composition with a sufficient amount of a colorant may be convenient to use in some applications. For example, in some applications, it may be desirable to color a firestop component red to indicate to the user that the component has firestop properties.

According, in an aspect of the present invention, there is provided a composition for a firestop. The composition comprises about 30 wt% to about 60 wt% of a thermoplastic; about 5 wt% to about 55 wt% of expandable graphite; about 5 wt% to about 20 wt% alumina trihydrate or magnesium hydroxide; and a flame retardant compound or mixture comprising antimony and a halogen, the weight ratio of the alumina trihydrate or magnesium hydroxide to the flame retardant compound or mixture comprising antimony and halogen being from about 1:10 to about 4:1. The halogen may include bromine. The flame retardant compound may include brominated antimony. The flame retardant mixture may include an antimony oxide and a compound containing bromine. The antimony oxide may be antimony trioxide. The thermoplastic may comprise a halogen-free thermoplastic polymer. The thermoplastic may comprise ethylene vinyl acetate, polyethylene, polypropylene, polystyrene or acrylonitrile butadiene styrene. The thermoplastic may comprise polyvinyl chloride. The composition may comprise about 35 to about 60 wt% of the thermoplastic. The composition may comprise about 42 wt% of the thermoplastic. The composition may comprise about 15 to about 45 wt% of the expandable graphite, such as about 20 to about 30 wt% of the expandable graphite. The composition may comprise about 15 wt% of alumina trihydrate. The composition may comprise about 12 to 16 wt% of the flame retardant compound or mixture comprising antimony and the halogen. The composition may further comprise a filler. The composition may comprise a colorant. The composition may further comprise a stabilizer for stabilizing the thermoplastic.

In accordance with another aspect of the present invention, there is provided a flame retardant composite. The flame retardant composite comprises expandable graphite; alumina trihydrate; antimony; and a halogen. The flame retardant composite may comprise brominated antimony. The flame retardant composite may comprise antimony trioxide and a bromine-containing compound.

Other aspects and features of the present invention will become apparent to those of ordinary skill in the art upon review of the following description of specific embodiments of the invention in conjunction with the accompanying figures.

### BRIEF DESCRIPTION OF THE DRAWINGS

In the figures, which illustrate, by way of example only, embodiments of the present invention,

**FIG. 1** is a data graph showing measurement results of effective heat of combustion for sample materials;

**FIG. 2** is a data graph showing measurement results of rate of heat release for sample materials;

**FIG. 3** is a data graph showing measurement results of smoke generation for sample materials;

**FIG. 4** is a data graph showing measurement results of mass loss for sample materials;

**FIG. 5** is a data graph showing measurement results of effective heat of combustion for sample materials;

**FIG. 6** is a data graph showing measurement results of rate of heat release for sample materials;

**FIG. 7** is a data graph showing measurement results of smoke generation for sample materials;

**FIG. 8** is a data graph showing measurement results of mass loss for sample materials; and

**FIG. 9** includes different views of a sample product formed from a firestop material, exemplary of an embodiment of the present invention.

### DETAILED DESCRIPTION

An exemplary embodiment of the present invention relates to a thermoplastic, intumescent composition suitable for use in firestop applications.

"Firestop" typically refers to a material or a passive fire protection system that is used to seal, or partially seal or block, openings and joints in various structures such as walls, floors, ceilings, or the like, to prevent or limit the spread of fire, smoke, or fumes through the openings.

The exemplary firestop composition includes a thermoplastic and a synergistic mixture of an intumescent and at least two flame retardants.

The intumescent in the mixture is an expandable graphite, which may be an intercalated graphite. The expandable graphite is present in the amount of about 5 to about 55 wt%, about 10 to about 45 wt% or about 15 to about 45 wt% of the total weight of the composition. In an exemplary embodiment, the composition may contain about 20 to about 30 wt% of expandable graphite, such as about 30 wt%.

The expandable graphite will start to expand when heated to above an onset temperature (referred to as the intumescence temperature herein). Typically, the intumescence temperature of an expandable graphite is above about 150 °C.
In some embodiments, the intumescence temperature of the graphite used may be as high as about 200 °C or about 220 °C, depending on the application and the other materials included in the composition. The expandable graphite material for a particular application may be selected so that the onset temperature is high enough to avoid premature expansion.

An expandable graphite may expand by more than 300 ml/g on heating. In different embodiments, the expandable graphite used may have an expansion volume of about 35 to about 350 ml/g.

The flame retardants in the mixture include both alumina trihydrate (ATH) (or magnesium hydroxide (Mg(OH)₂) in place of ATH) and a compound or mixture that contains both a halogen and antimony. For example, the flame retardants may include a combination of ATH and brominated antimony. The brominated antimony may be replaced with a mixture of an antimony oxide such as antimony trioxide (ATO) and a bromine-containing compound. An exemplary suitable bromine-containing compound is Ethane-1,2-bis(pentabromophenyl) (EBPBP).
Commercially available bromine-containing flame retardants include SAYTEX^{™} BT 93, SAYTEX^{™} 102, SAYTEX^{™} 8010 and SAYTEX^{™} 105. Bromine in the flame retardant compound or mixture may be replaced with chlorine, or another halogen.

The relative ratio of ATH or Mg(OH)₂, antimony, and halogen in the composition may vary. For example, the weight ratio of ATH or Mg(OH)₂ to halogen compound may be from about 0.2:1 to about 5:1, or from about 0.2:1 to about 2.5:1, based on EBPBP as the halogen compound. The weight ratio of antimony compound to halogen compound may be from about 1:1 to about 1:4 or from about 1:2.5 to about 1:3.5, based on ATO as the antimony compound and EBPBP as the halogen compound.

Thus, in terms of molar ratio, the firestop composition may comprise ATH or Mg(OH)₂ and a halogen flame retardant in a molar ratio from about 2.5:1 to about 65:1, or from about 2.5:1 to about 33:1. The molar ratio of antimony compound to halogen compound may be from about 3.3:1 to about 3.3:4 or from about 3.3:2.5 to about 3.3:3.5.

In one example, the weight ratio of ATH to the total weight of the antimony/halogen compound or mixture may be from about 1:10 to about 4:1, or may be about 5:4.

The composition may contain about 5 to about 20 wt% or about 15 to about 20 wt% of ATH or Mg(OH)₂, and about 10 to about 18 wt% or about 12 to about 16 wt% of the antimony/halogen compound or mixture.

The concentrations of the expandable graphite and the flame retardants may be selected to obtain desired flame retardant properties. For example, when measured with the SATM E 1354-10 Standard, an exemplary composition may exhibit one or more of the following properties: total heat released lower than about 10 MJ/m², such as about 6 MJ/m²; peak rate of heat release lower than about 90 kW/m², such as about 76.4 kW/m²; total mass loss lower than about 1 kg/m², such as about 0.5 kg/m²; time to flame out shorter than about 200 s, such as about 170 or 140 s; and total smoke at about 1 to about 2 m².

The thermoplastic in the composition may be a thermoplastic polymer. Suitable thermoplastic polymers may include halogen-free thermoplastic polymers. The thermoplastic polymer may include ethylene vinyl acetate (EVA), polyethylene (PE) which may be low density (LD) or high density (HD), polypropylene (PP), polystyrene (PS) or acrylonitrile butadiene styrene (ABS). The thermoplastic polymer may also include polyvinyl chloride (PVC). Other suitable thermoplastic polymers or different combinations of thermoplastic polymers may also be used. The polymer used in any particular embodiment may be selected based on a number of factors, which will be discussed below. For example, the thermoplastic polymer should be soft enough to allow the graphite to sufficiently expand when exposed to fire.

As the temperature at which graphite starts to expand is relatively low, the selected thermoplastic should have a correspondingly low transition temperature at which the thermoplastic becomes plastic (e.g. a low melting temperature), so that the composition mixture can be processed and shaped (e.g., molded) at relatively low temperatures so that significant expansion of the graphite in the composition will not be triggered.

The thermoplastic in the composition may be from about 30 to about 60 wt%, from about 35 to about 60 wt% or from about 35 to about 50 wt% of the total weight of the composition. In one embodiment, the thermoplastic concentration may be about 42 wt%.

The thermoplastic may serve as a carrier or binder. Its concentration may be sufficiently high to bind the other components in the composition so that the composition is stable in normal use conditions. The thermoplastic may be selected from thermoplastic materials that provide the desired physical strength and hardness in the particular application. The thermoplastic may also be selected from materials that can provide additional flame retardency or promote char formation.

A layer of "char" formed during burning can provide a thermal insulation barrier that prevents heat transfer. Char formation can also provide a barrier that reduces volatile gas formation and separates oxygen in the gas from the underlying (burning) substrate.

In some applications, it may be convenient if the composition as a whole is moldable or can be shaped by molding such as extrusion molding. In such cases, the thermoplastic and its concentration may be selected so that the composition can be conveniently molded or extrusion molded to form a desired shape.

In some embodiments, the composition comprises from about 30 to about 60 wt% thermoplastic, from about 5 to about 55 wt% expandable graphite, from about 5 to about 20 wt% alumina trihydrate or magnesium hydroxide, and a flame retardant compound or mixture comprising antimony and a halogen, the weight ratio of the alumina trihydrate or magnesium hydroxide to the flame retardant compound or mixture comprising antimony and halogen being from about 1:10 to about 4:1.

In other embodiments, the composition comprises from about 35 to about 60 wt% thermoplastic, from about 15 to about 45 wt% expandable graphite, from about 15 to about 20 wt% alumina trihydrate, and from about 12 to about 16 wt% of a flame retardant compound or mixture comprising antimony and a halogen.

In other embodiments, the composition comprises from about 40 to about 45 wt% thermoplastic, from about 20 to about 30 wt% expandable graphite, about 15 to about 20 wt% alumina trihydrate, antimony trioxide and a flame retardant comprising bromine, the weight ratio of the alumina trihydrate to the combined antimony trioxide and flame retardant comprising bromine being about 5:4.

The specific component materials and their respective concentrations in the composition may be selected taking into consideration a number of factors including those discussed below.

One factor to be considered is that the composition as a whole should have a sufficient expansion ratio suitable for the intended application. The expansion ratio of the composition may be increased by using a softer thermoplastic polymer, or by increasing the weight ratio of the expandable graphite to the thermoplastic in the composition. As can be appreciated, depending on the specific materials used, in some cases, particularly when the thermoplastic polymer used has a melting point much higher than the onset (intumescence) temperature of the expandable graphite, a composition with a softer thermoplastic and a lower ratio of graphite to thermoplastic can exhibit the same expansion ratio as a composition with a harder thermoplastic and a higher ratio of graphite to thermoplastic. Thus, in some embodiments, it may be more convenient to use a softer thermoplastic material so that less graphite is required.

Another factor to be considered is that it is generally desirable that the composition has adequate fire extinguishing char forming ability on burning of the composition, resulting in a short burning time. Thus, materials that can form char or promote char formation may be selected in some embodiments. However, it is not necessary that all component materials in the composition can form char or promote char formation on burning. It may be sufficient in some embodiments if the combination of component materials selected as a whole provide adequate char forming properties.

A further factor is that sufficient flame retardant materials are used. In addition to brominated antimony and alumina trihydrate, one or more other flame retardants may be included in the composition. Further, a suitable thermoplastic, or another component of the composition, that is flame retardant or produces a flame retardant when exposed to fire may be conveniently used. Generally, materials that have one or more of the following properties may be considered for use as flame retardants. One group of potentially suitable materials is compounds that decompose endothermically at high temperatures, which can absorb heat from the surroundings when exposed to fire, thus producing a cooling effect. For example, many hydrated materials such as alumina hydrates or magnesium hydroxides are examples of such materials. A further group of potentially suitable materials is materials that can serve as thermal insulation barriers. For example, intumescent materials on expansion may form thermal insulation barriers. A layer of char formed during burning can also form a thermal insulation layer. Another group of potentially suitable materials is materials that are chemically inert at high temperatures so that they act as diluents and can lower the relative concentration of the flammable and combustible portion of the composition, thus lowering the amount of heat per volume released during burning. Materials that release inert gases when decomposed on heating may also be potentially suitable, as the inert gases can dilute the combustible gases and oxygen surrounding the burning material, thus reducing their partial pressures and consequently the rate of combustion reactions. Materials that release gas phase radicals that can quench propagation of radical oxidation reactions during thermal degradation may also be potentially suitable. A material that has more of the above described properties may be a more efficient flame retardant.

In some embodiments, the composition may contain two or more components each of which is individually a weak retardant or even non-retardant, but when combined can produce a synergistic flame retardant effect. For example, while antimony oxides exhibit little flame retardant properties when used alone and halogens are weak flame retardants themselves, a mixture of an antimony oxide and a halogen can form a strong flame retardant.

In this respect, it has been found, unexpectedly, that the combination of graphite, alumina trihydrate, and a compound or mixture that contains antimony and a halogen can provide a synergistic effect as flame retardants, as will be further discussed in the Examples below.

In some embodiments, certain components of the composition may not be flame retardant. In some embodiments, one or more of the component materials in the composition may even be flammable if they provide some desired or required properties. In such cases, the ratio of flammable materials and flame retardants in the composition should be selected so that the composition as a whole is sufficiently resistant to fire and can provide the desired firestop effect.

A further factor to be considered is that the selected components and the mixture as a whole are compatible with each other and can be processed at a sufficiently low temperature to prepare the composition. For example, materials that decompose at temperatures below the normal processing temperature required for preparing the composition or a product formed from the composition may not be suitable. A material that requires processing at a high temperature substantially above the intumescence temperature of the expandable graphite should also be avoided, unless the high temperature processing step(s) can be performed before the material is mixed with the expandable graphite.

In some embodiments, additional factors may need to be considered. For example, environmental or health factors and related regulatory requirements may need to be considered. For instance, materials that release halogen gas or other toxic or hazardous gases when heated may need to be avoided in some embodiments. Materials that are incompatible, or will release gases that are incompatible, with a part or portion of the surrounding structure may need to be avoided in some applications. Materials that release less smoke may also be selected in some applications.

Another factor to be considered is aging. Some materials or combination of materials may tend to degrade over time. For example, some intumescent materials contain water and rely on the water content to function as an intumescent. However, water can be lost over time, thus degrading the intumescence. Some materials such as polymers can be oxidized over time which can also cause degradation. To prevent or reduce degradation, the component materials may be selected from materials that are less prone to degradation. Further, stabilizers such as antioxidants may be added to the composition to prevent degradation of another component material, such as a thermoplastic polymer.

Suitable stabilizers for stabilizing (i.e., preventing degradation of) thermoplastic polymers may include phosphate, or antioxidants such as Alvinox™ provided by 3V Sigma. Other stabilizers may also be used depending on the material to be stabilized. The concentration of the stabilizer in the composition may be from about 0.1 to about 1 wt%.

It can also be appreciated that expandable graphite does not rely on water to function as an intumescent. Thus, while water loss is a common cause of aging in conventional intumescent materials that rely on water content to function, this problem can be avoided in exemplary embodiments of the composition described herein.

A further factor to be considered is the chemical and physical properties that may be required or desirable for the particular application for which the composition is to be used. For example, certain mechanical strength, hardness, durability, and reliability may be required when the composition is used in certain applications, such as in electrical fittings or the like. In such cases, the component materials and their respective concentrations may be selected to ensure that the resulting product can exhibit the required properties. In this regard, it is expected that with the synergistic mixture of intumescent and flame retardants described herein, it is convenient to control the physical properties of the resulting compositions, such as their mechanical strength.

Typically, but not necessarily, the composition may include a filler material or one or more other functional materials that provide desired properties to the resulting composition or product.

A filler material may simply add volume to the composition, such as to reduce cost, or may additionally provide some desired functionalities. In some embodiments, a filler may serve as a binding agent that binds the component materials. Example fillers include inorganic clay and colorants, or the like. In one embodiment, BYK™-P4101 provided by BYK Chemie may be used as the filler. In some embodiments, the composition may contain about 0.2 to about 1.5 wt% of the filler. In other embodiments, the composition may contain up to about 18 wt% of fillers.

For some applications, the composition may be colored, such as red to indicate to a user that the composition or an object formed from the composition has firestop properties. For this purpose, the composition may include a colorant. In some embodiments, up to about 18 wt% of a colorant may be included in the composition.

Conveniently, with a synergistic mixture of the expandable graphite and the flame retardants, the concentrations of the filler or colorant may be higher than when a single flame retardant or non-synergistic mixture of flame retardants is used. In some embodiments, the composition may contain up to about 40-43 wt% of plastic materials and about 57-60 wt% of other functional component materials. As a result, the properties of the composition may be more conveniently adjusted.

The composition of exemplary embodiments described herein may be formed to have a suitable combination of hardness, expansion ratio, and flame retardance properties for the particular application, which may not be obtainable from other intumescent materials previously known in the art.

The mixing of the various components to form the compositions can be carried out using any suitable techniques know to those skilled in the art.

Other additives may also be added to the composition as will be understood by those skilled in the art. For example, plasticizers, anti-ozonants, pigments, resins, or the like, may be added. Suitable additional intumescent materials such as suitable mixtures of alkali metal silicates may also be added in some embodiments.

The composition described herein may be prepared in any suitable process. In an exemplary embodiment, the composition may be prepared as follows.

The exemplary compositions disclosed herein may be conveniently used in various applications as a firestop material for suppressing or confining fire, and may be used to form heat-insulating barriers. For examples, the composition may be molded to form articles which, in case of fire, swell to close apertures, gaps, or other openings in places such as floor, wall, or ceiling passages, wall spaces, door fittings, window fittings, containers, electrical boxes, cable boxes, conduits, pipes, or the like. In a particular application, the composition may be used in a housing or support for pot lights.

Exemplary embodiments of the present invention are further illustrated with the following examples, which are not intended to be limiting.

EXAMPLES

In the following examples, unless otherwise specified, the following materials were used as received from the sources indicated.

EVA (Evatane™ 28-25) and HDPE (HDPE 5502) were obtained from Arkema. Chlorinated Paraffin (Chlorez™ 700) was obtained from Dover Chemical.

Expandable graphite (Nyagraph™ 249) was obtained from Nyacol™ Nano Technologies.

Composition 0201-127 was a mixture of thermoplastic (20 wt%), antimony trioxide (20 wt%) and Saytex 8010 (60 wt%), obtained from PadanaPlast USA.

Alumina trihydrate (SB-30 SLM035) was obtained from L.V. Lomas. Magnesium hydroxide (MagChem™ MH-1 0) was obtained from Martin Marietta Magnesia Specialties Canada.

Antimony Trioxide was obtained from Oxxides, Inc., NY.

Fillers (BYK TM P41 01) were obtained from BYK Chemie.

Antioxidants (Alvinox™ FB and Alvinox™ P) were obtained from 3V Sigma.

Alkali metal silicate based intumescent powders (IP) were formed according to US patent No. 6,645,278 B2 to Langille et al., issued November 11, 2003.

Color pigments (Microlen™ Red) were obtained from BASF.

Example IA. Sample firestop composition, Sample IA

Sample IA (test code 166-4) was prepared as follows.

The composition for Sample IA was prepared by forming a mixture of Evatane 28-25 (38.9 wt%), 0201-127 (15 wt%), Nyagraph 249 (30 wt%), SB-30SLM035 (15 wt%), BYK P4101 (1 wt%), and Alvinox FB (0.1 wt%). All weight percentages shown in the parentheses are based on total weight of the composition.

The chemical contents of Sample IA, and other samples described below, are listed in **Tables IA and IB.** The amount of plastic is reference to the total thermoplastic, including the LDPE contained in the 0201-127 (20 wt%).

**Table IA. Chemical Contents of Sample Compositions (in wt%)**

| Sample | IA (166-4) | IB (166-6) | IIA (166-10) | IIB (166-11) | IIC (151) | IID (155) |
|---|---|---|---|---|---|---|
| Plastic | 41.9 | 42.8 | 41.94 | 41.9 | 38 | 43.2 |
| Graphite | 30 | 20 | 30 | 30 | - | 43.9 |
| alkali metal silicate | - | - | - | - | 32 | - |
| ATO+EBPBP | 12 (3+9) | 16 (4+12) | 26.96 (6.74+20.22) | - | 12 (3+9) | 12 (3+9) |
| ATH | 15 | 20 | - | 27 | 16.9 | 0 |
| Filler | 1 | 1 | 1 | 1 | 1 | 0.8 |
| Antioxidant | 0.1 | 0.2 | 0.1 | 0.1 | 0.1 | 0.1 |

**Table IB. Chemical Contents of Sample Compositions (in wt%)**

| Sample | IIIA (166-12) | IIIB (166-13) | IIIC (166-14) | IIID (166-15) | IIIE (166-16) | IIIF (166-17) | IIIG (166-18) |
|---|---|---|---|---|---|---|---|
| Plastic | 41.9 | 41.9 | 41.9 | 41.9 | 41.9 | 41.9 | 41.9 |
| Chlorinated Paraffin | - | 9 | - | - | - | - | 9 |
| Graphite | 30 | 30 | 30 | 30 | 30 | 30 | 30 |
| ATO | 3 | 3 | 5.5 | 4.3 | 1.8 | 0.5 | 3 |
| EBPBP | 9 | - | 16.5 | 12.8 | 5.3 | 1.5 | - |
| ATH | - | 15 | 5 | 10 | 20 | 25 | 15 |
| Mg(OH)₂ | 15 | - | - | - | - | - | - |
| Filler | 1 | 1 | 1 | 1 | 1 | 1 | 1 |
| Antioxidant | 0.1 | 0.1 | 0.1 | 0.1 | 0.1 | 0.1 | 0.1 |

Example IB. Sample firestop composition, Sample IB

Sample IB (test code 166-6) was prepared by forming a mixture of HDPE 5502 (38.8 wt%), 0201-127 (20 wt%), Nyagraph 249 (20 wt%), SB-30SLM035 (20 wt%), BYK P4101 (1 wt%), Alvinox FB (0.1 wt%) and Alvinox P (0.1 wt%).

Example IIA. Comparison Sample IIA

Comparison Samples IIA (test code 166-10) was prepared similarly as Sample IA, but without ATH. The concentrations of the other components were consequently adjusted. However, the total concentrations of each of the functional components (plastic, intumescent, or flame retardants) in the sample compositions were maintained at about the same level as in Sample IA.

The composition for Sample IIA contained a mixture of Evatane 28-25 (35.2 wt%), 0201-127 (33.7 wt%), Nyagraph 249 (30 wt%), BYK P41 01 (1 wt%), and Alvinox FB (0.1 wt%).

Example IIB. Comparison Sample IIB

Comparison Samples IIB (test code 166-11) was prepared similarly as Sample IA, but without 0201-127. The concentrations of the other components were consequently adjusted. However, the total concentrations of each of the functional components (plastic, intumescent, or flame retardants) in the sample compositions were maintained at about the same level as in Sample IA.

The composition for Sample IIB contained a mixture of Evatane 28-25 (41.9 wt%), Nyagraph 249 (30 wt%), SB-30SLM035 (27 wt%), BYK P4101 (1 wt%), and Alvinox FB (0.1 wt%).

Example IIC. Comparison Sample IIC

Comparison Samples IIC (test code 151) was prepared by forming a mixture of Evatane 28-25 (35 wt%), 0201-127 (15 wt%), IP (32 wt%), SB-30SLM035 (16.9 wt%), BYK P41 01 (1 wt%), and Alvinox FB (0.1 wt%). That is, Sample IIC did not contain any expandable graphite. It instead contained an alkali metal silicate based intumescent (IP). Sample IIC however contained similar concentrations of ATH and 0201-127 as in Sample IA.

Example IID. Comparison Sample IID

Comparison Sample IID (test code 155) was prepared similarly as Sample IA, but without ATH. The composition for Sample IID contained a mixture of Evatane 28-25 (40.2 wt%), 0201-127 (15 wt%), Nyagraph 249 (43.9 wt%), BYK P4101 (1 wt%), and Alvinox FB (0.1 wt%). The concentration of 0201-127 in Sample IID was the same as in Sample IA.

Example IIIA. Sample IIIA

Sample IIIA (test code 166-12) was prepared similarly as Sample IA, but replacing the ATH with Mg(OH)₂. The composition for Sample VI contained a mixture of Evatane 28-25 (38.9 wt%), 0201-127 (15 wt%), Nyagraph 249 (30 wt%), MagChem MH-1 0 (15 wt%), BYK P41 01 (1 wt%), and Alvinox FB (0.1 wt%). The concentration of 0201-127 in Sample IIIA was the same as in Sample IA.

Example IIIB. Sample IIIB

Sample IIIB (test code 166-13) was prepared by forming a mixture of Evatane 28-25 (41.9 wt%), Chlorez 700 (9 wt%), Nyagraph 249 (30 wt%), SB-30SLM035 (15 wt%), ATO (3 wt%), BYK P4101 (1 wt%), and Alvinox FB (0.1 wt%). This sample was formulated to provide the halogen from chlorinated paraffin without any brominated flame retardant Saytex 1080.

Example IIIC. Sample IIIC

Sample IIIC (test code 166-14) was prepared with the same components as in Sample IA, but with a different ratio of 0201-27:ATH. The composition for Sample IIIC contained a mixture of Evatane 28-25 (36.4 wt%), 0201-127 (27.5 wt%), Nyagraph 249 (30 wt%), SB-30SLM035 (5 wt%), BYK P41 01 (1 wt%), and Alvinox FB (0.1 wt%). The weight ratio of 0201-127:ATH is approximately 5:1.

Example IIID. Sample IIID

Sample IIID (test code 166-15) was prepared with the same components as in Sample IA, but with a different ratio of 0201-27:ATH. The composition for Sample IIID contained a mixture of Evatane 28-25 (37.6 wt%), 0201-127 (21.3 wt%), Nyagraph 249 (30 wt%), SB-30SLM035 (10 wt%), BYK P41 01 (1 wt%), and Alvinox FB (0.1 wt%). The weight ratio of 0201-127:ATH is approximately 2:1.

Example IIIE. Sample IIIE

Sample IIIE (test code 166-16) was prepared with the same components as in Sample IA, but with a different ratio of 0201-27:ATH. The composition for Sample IIIE contained a mixture of Evatane 28-25 (40.1 wt%), 0201-127 (8.8 wt%), Nyagraph 249 (30 wt%), SB-30SLM035 (20 wt%), BYK P4101 (1 wt%), and Alvinox FB (0.1 wt%). The weight ratio of 0201-127:ATH is approximately 0.44:1.

Example IIIF. Sample IIIF

Sample IIIF (test code 166-17) was prepared with the same components as in Sample IA, but with a different ratio of 0201-27:ATH. The composition for Sample IIIF contained a mixture of Evatane 28-25 (41.4 wt%), 0201-127 (2.5 wt%), Nyagraph 249 (30 wt%), SB-30SLM035 (25 wt%), BYK P4101 (1 wt%), and Alvinox FB (0.1 wt%). The weight ratio of 0201-127:ATH is approximately 0.1:1.

Example IIIG. Sample IIIG

Sample IIIG (test code 166-18) contains HDPE and Chlorez 700 and was prepared by forming a mixture of HDPE 5502 (41.9 wt%), Chlorez 700 (9 wt%), Nyagraph 249 (30 wt%), SB-30SLM035 (15 wt%), ATO (3 wt%), BYK P4101 (1 wt%), and Alvinox FB (0.1 wt%). Sample IIIG has the same concentrations as sample IIIB, but uses HDPE instead of EVA.

Performance Tests of Samples

The Sample materials described above were tested according to ASTM E 1354 standards.

The test specimens were each approximately 100 mm x 100 mm x 3 mm in size, and were conditioned at a temperature of about 23 ± 3 °C and a relative humidity of 50 ± 5% prior to testing.

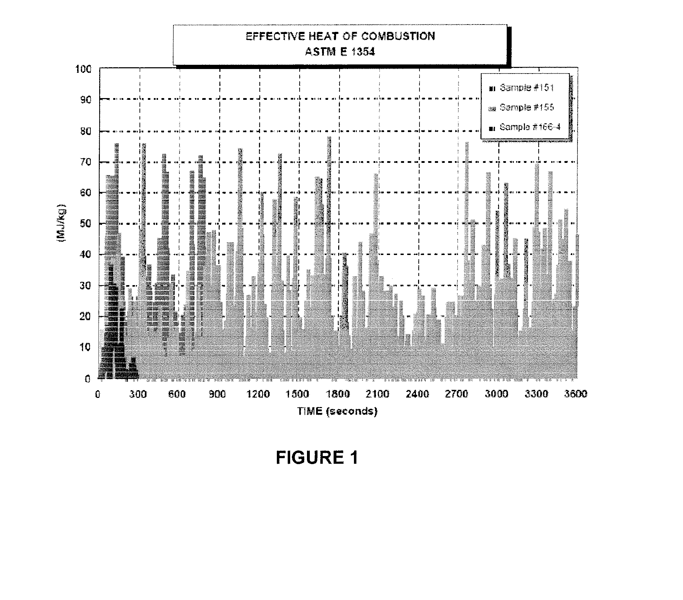

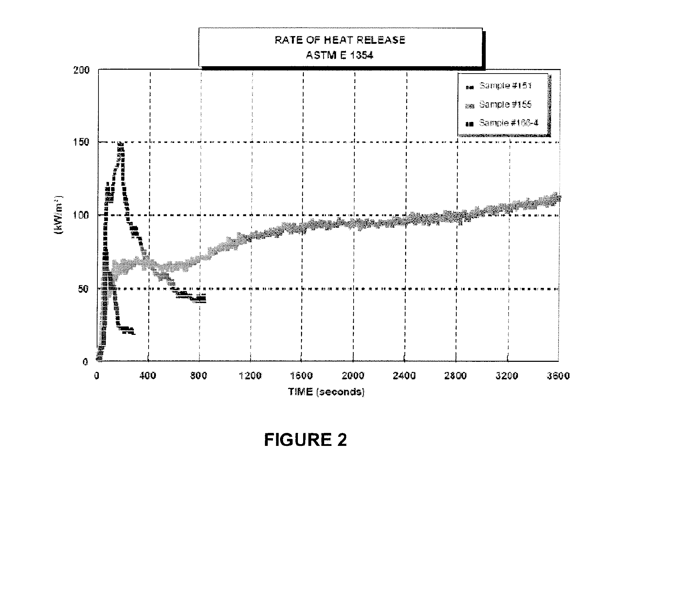

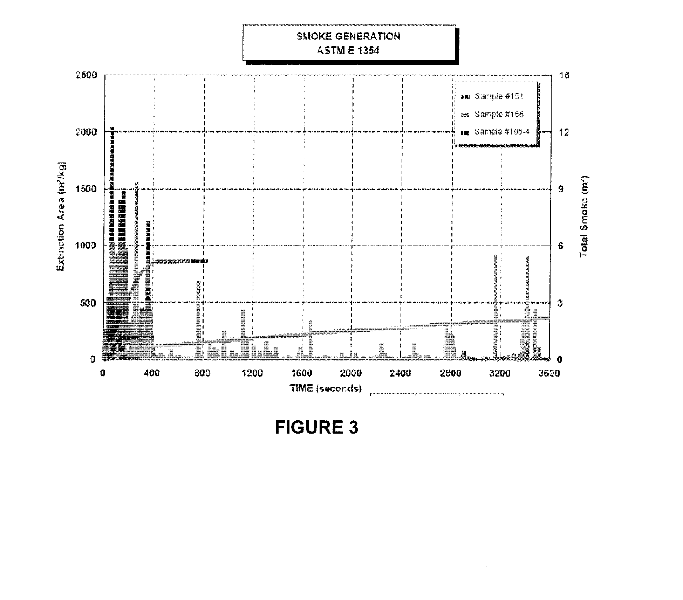

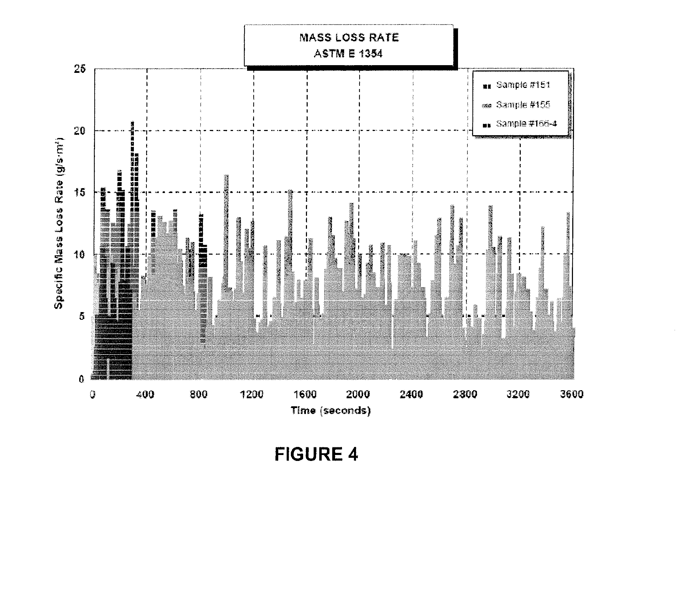

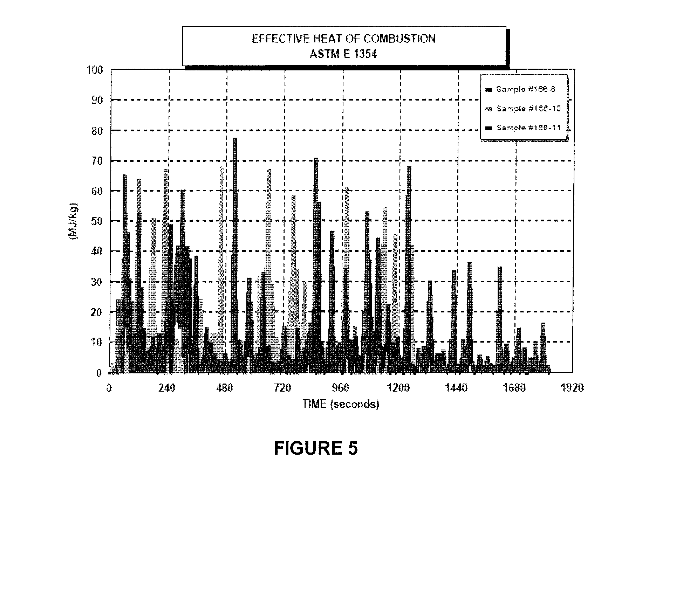

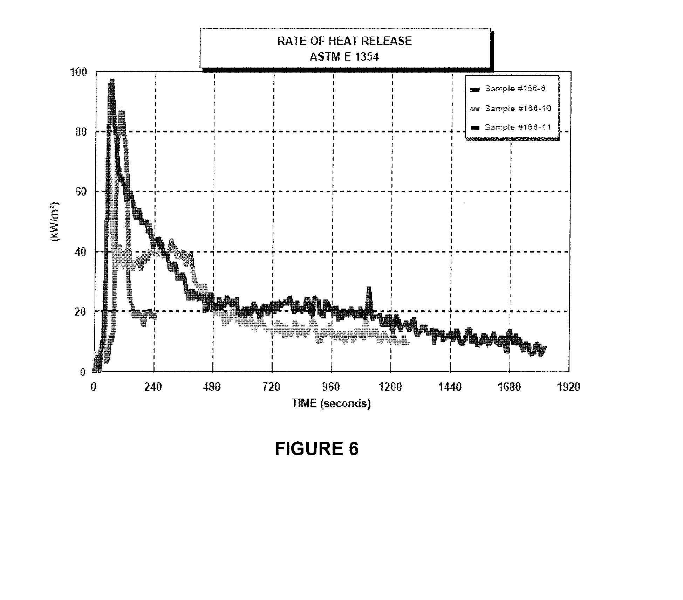

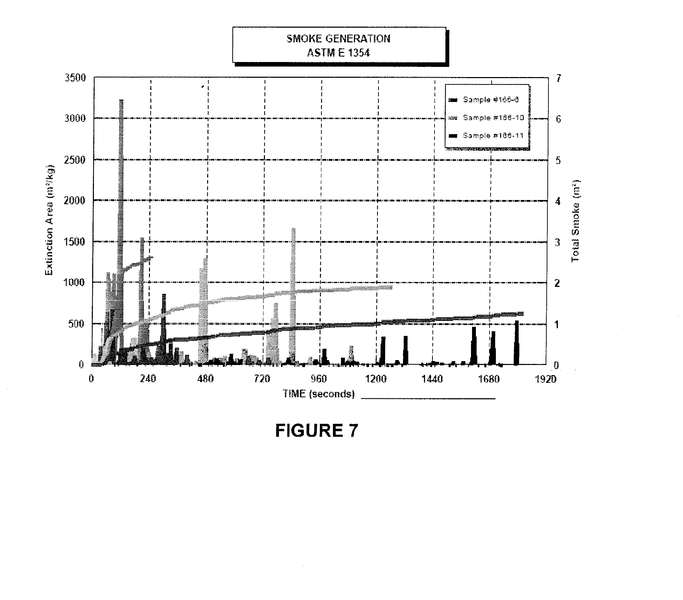

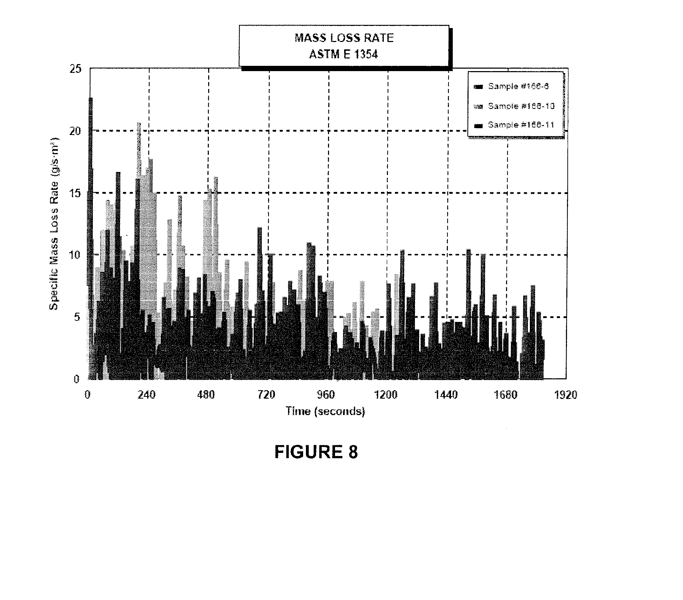

Representative test results are summarized in **Tables II** and III and shown in **FIGS. 1 to 8****.**

**Table II. Summary of Test Results**

| Sample | Total Heat Released (MJ/m²) | Peak Rate of Heat Release (kW/m²) | Total Mass Loss (Kg/m²) | Time to Flame Out (s) | Total Smoke (m²) |
|---|---|---|---|---|---|
| IA | 6.14 | 76.4 | 0.58 | 170 | 1 |
| IB | 6.32 | 87.1 | 0.41 | 139 | 2 |
| IIA | 25.29 | 71.8 | 2.08 | 1091 | 1.7 |
| IIB | 39.51 | 97.2 | 1.9 | 1600 | 1.1 |
| IIC | 54.25 | 149.5 | 1.82 | 722 | 5.2 |
| IID | 309.93 | 115.4 | 1.95 | > 3600 | 2 |

**Table III. Summary of Test Results**

| Sample | Total Heat Released (MJ/m²) | Peak Rate of Heat Release (kW/m²) | Time of Ignition (s) | Time to Flame Out (s) | Total Smoke (m²) |
|---|---|---|---|---|---|
| IA | 6.14 | 76.4 | 51 | 170 | 1 |
| IIA | 25.29 | 71.8 | 46 | 1091 | 1.7 |
| IIB | 39.51 | 97.2 | 40 | 1600 | 1.1 |
| IB | 6.32 | 87.1 | 100 | 139 | 2 |
| IIIA | 6.56 | 74.7 | 37 | 160 | 0.9 |
| IIIB | 20.46 | 93 | 43 | 465 | 2.2 |
| IIIC | 28.1 | 62.5 | 0 | 1800 | 0.9 |
| IIID | 3.53 | 81.8 | 44 | 80 | 1.5 |
| IIIE | 23.2 | 87.8 | 42 | 578 | 1.6 |
| IIIF | 21.62 | 94.8 | 40 | 709 | 2 |
| IIIG | 8.38 | 74.2 | 60 | 250 | 1 |
| IIC | 54.25 | 149.5 | 32 | 722 | 5.2 |
| IID | 309.93 | 115.4 | 121 | > 3600 | 2 |

As can be seen, Samples IA and IB, which contained a combination of expandable graphite, ATH, halogen and antimony, showed superior properties as compared to the comparison samples, IIA, IIB, IIC and IID. In particular, it is expected that materials with lower total heat release, lower peak rate of heat release, lower total mass loss, shorter time to flame out, and lower total smoke can provide better firestop performance.

Samples IA (166-4), IIA (166-10), IIB (166-11), IIIA (166-12), IIIB (166-13), IIIC (166-14), IIID (166-15), IIIE (166-16), IIIF (166-17) and IIIG (166-18) all contain 41.9% thermoplastic and contain 30% Niagraph 249, and thus are all intumescent formulations.

Samples IA (166-4), IIIC (166-14), IIID (166-15), IIIE (166-16) and IIIF (166-17) all contain the same components but with varied ratio of 0201-127 to ATH. Samples IA (166-4) and IIID (166-15), having a ratio of 1:1 and 2.1:1, respectively, demonstrate superior properties. When the ratio of 0201-127 to ATH is increased to 5:1 as in Sample IIIC (166-14) or decreased to 0.44:1 as in Sample IIIE (166-16) or to 0.1:1 as in Sample IIIF (166-17), the measured flamestop properties as seen in Table III are less desirable, for example, comparing the burning time (time to flame out minus time of ignition). Samples IA (166-4) and IIID (166-15) show formation of a protective carbonated char, the result of a short burning time with quick extinguishing. In Samples IIIC (166-14), IIIE (166-16) or IIIF (166-17), burning time is prolonged, releasing greater amounts of heat.

Comparison of Sample IA (166-4) with Sample IIIA (166-12) shows the two formulations demonstrate similar fire protective properties, indicating that magnesium hydroxide can be used in place of ATH.

Comparison of Sample IA (166-4) and IIIB (166-13) indicates that Sample IA (166-4) is superior to IIIB (166-13). Sample IA (166-4) includes Saytex 8010, and thus the halogen is in a brominated flame retardant compound as opposed to being included in a chlorinated paraffin (as is the case with IIIB (166-13)). The percentages of the other components are the same between Sample IA (166-4) and IIIB (166-13). Thus, the location of the halogen in the paraffin and/or the substitution of SAYTEX 8010 with Chlorez 700 provides much less desirable flamestop properties, as compared with the combination of the expandable graphite, the ATH and the flame retardant compound or mixture containing the halogen and antimony. In the case of Sample IIIB (166-13), no protective char was formed, had a burn time 3.5 times longer, produces 3.3 times more heat and 2.2 times more smoke than Sample IA (166-4).

Sample IB (166-6) includes HDPE instead of EVA as Sample IA (166-4), and also forms the protective char, with short burning period and low heat release. Sample IIIG (166-18) also includes HDPE, but uses Chlorez 700 as the source of halogen. Sample IIIG (166-18) has an extended burn period and releases more heat, in comparison to Samples IA (166-4), IIIA (166-12), IIID (166-15) and IB (166-6).

Sample IID (155) does not contain ATH and has significant heat release and a very extended time to flame out.

The substantial improvement in different properties of the Samples IA and IB are also evident from the comparison data graphs shown in **FIGS. 1** to **8****.**

Example III. Sample Product

A sample product for use as a firestop at the top of pot lights was produced by injection molding a composition that contained a mixture of Evatane 28-25 (32.9 wt%), 0201-127 (15 wt%), Nyagraph 249 (30 wt%), SB-30SLM035 (15 wt%), BYK P41 01 (1 wt%), Alvinox FB (0.1 wt%), and Microlen Red color pigments (6 wt%). The pot lights may be used in either residential or commercial constructions and may be used for retrofit.

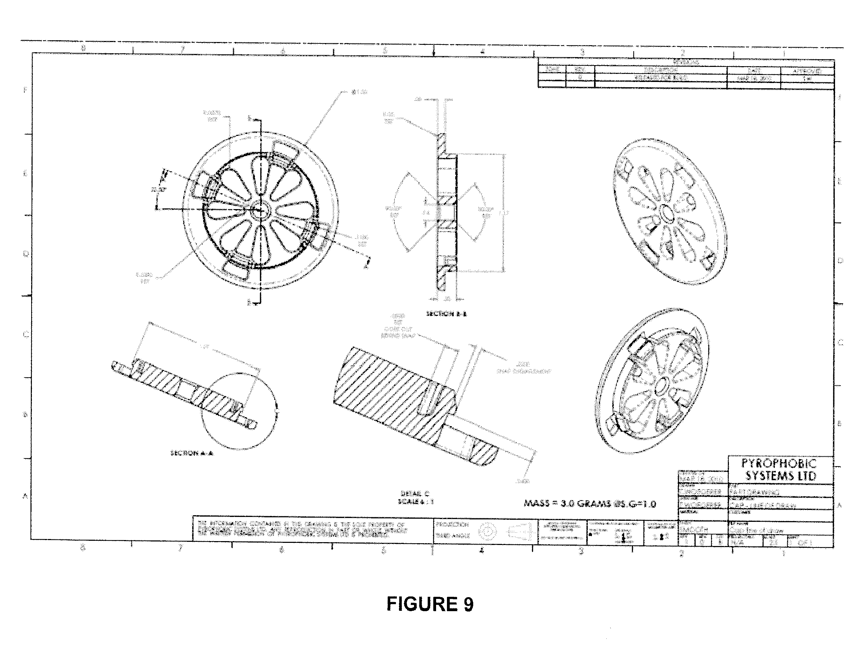

The firestop material was shaped into a cap or "bung" for the pot light. Mechanical drawings of the cap are shown in **FIG. 9****.**

When a list of items is given herein with an "or" before the last item, any of the listed items or any suitable combination of the listed items may be selected and used. For any list of possible elements or features provided in this specification, any sublist falling within a given list is also intended. Similarly, for any range provided, any subrange falling within a given range is also intended.

Of course, the above described embodiments are intended to be illustrative only and in no way limiting. The described embodiments are susceptible to many modifications of form, arrangement of parts, details and order of operation. The invention, rather, is intended to encompass all such modification within its scope, as defined by the claims.

## Claims

1. A composition for a firestop, comprising:
about 30 wt% to about 60 wt% of a thermoplastic;
about 5 wt% to about 55 wt% of expandable graphite;
about 5 wt% to about 20 wt% alumina trihydrate or magnesium hydroxide; and
a flame retardant compound or mixture comprising antimony and a halogen, the weight ratio of the alumina trihydrate or magnesium hydroxide to the flame retardant compound or mixture comprising antimony and halogen being from about 1:10 to about 4:1.

2. The composition of claim 1, comprising:
about 35 wt% to about 60 wt% of a thermoplastic;
about 15 wt% to about 45 wt% of expandable graphite;
about 15 wt% to about 20 wt% alumina trihydrate or magnesium hydroxide; and
from about 12 wt% to about 16 wt% of a flame retardant compound or
mixture comprising antimony and a halogen.

3. The composition of claim 1 or 2, wherein said halogen comprises bromine.

4. The composition of claim 1 or 2, wherein said flame retardant compound is brominated antimony.

5. The composition of claim 1 or 2, wherein said flame retardant mixture comprises an antimony oxide and a compound comprising bromine.

6. The composition of claim 5, wherein said antimony oxide is antimony trioxide.

7. The composition of any one of claims 1 to 5, wherein said thermoplastic comprises a halogen-free thermoplastic polymer.

8. The composition of claim 7, wherein said thermoplastic comprises ethylene vinyl acetate, polyethylene, polypropylene, polystyrene or acrylonitrile butadiene styrene.

9. The composition of any one of claims 1 to 6, wherein said thermoplastic comprises polyvinyl chloride.

10. The composition of any one of claims 1 to 9, comprising about 42 wt% of said thermoplastic.

11. The composition of any one of claims 1 to 10, further comprising one or more of a filler, a colorant and a stabilizer for stabilizing said thermoplastic.

12. A flame retardant composite, comprising:
expandable graphite;
alumina trihydrate;
antimony; and
a halogen.

13. The flame retardant composite of claim 12, comprising brominated antimony.

14. The flame retardant composite of claim 12, comprising antimony trioxide and a bromine-containing compound.
